# FASCICULE DE BREVET EUROPEEN

(11) **EP 1 440 329 B1**
(45) Date de publication et mention de la délivrance du brevet: **24.09.2008**
(21) Numéro de dépôt: 02796819.7
(22) Date de dépôt: 22.10.2002
(51) Int. Cl.: G01S 3/786, F41G 3/22

(54) **DISPOSITIF D'ACQUISITION DE CIBLE, AERONEF, SYSTEME D'ESTIMATION DE TRAJECTOIRE ET SYSTEME DE DEFENSE ASSOCIES**
ZIELERFASSUNGSEINRICHTUNG, FLUGZEUG, ZUGEORDNETES FLUGBAHNSCHÄTZSYSTEM UND VERTEIDIGUNGSSYSTEM
TARGET ACQUISITION DEVICE, AIRCRAFT, ASSOCIATED TRAJECTORY ESTIMATION SYSTEM AND DEFENCE SYSTEM

(30) Priorité: 23.10.2001 FR 0113668
(43) Date de publication de la demande: 28.07.2004
(73) Titulaire: Thales, 75008 Paris (FR)
(72) Inventeur: UNTERREINER, Patrick Thales Intellectual Property, F-94117 Arcueil Cedex (FR); THILLOT, Marc Thales Intellectual Property, F-94117 Arcueil Cedex (FR)
(74) Mandataire: Henriot, Marie-Pierre
(86) Numéro de dépôt international: PCT/FR2002/003613
(87) Numéro de publication internationale: WO 2003/036323

(56) Documents cités:
- WO-A-97/41460
- WO-A-98/36373
- US-A- 5 418 364
- US-A- 5 672 872
- US-A- 5 808 732

## Description

L'invention concerne le domaine des dispositifs d'acquisition de cible, notamment de cible volante, ainsi que les aéronefs de surveillance intégrant ces dispositifs d'acquisition de cible, les systèmes d'estimation de trajectoire de cible associés, et les systèmes de défense contre cible utilisant les systèmes d'estimation de trajectoire.

Le dispositif d'acquisition de cible est utilisé par un système d'estimation de trajectoire lequel localise la cible afin de permettre par exemple à un système de défense de neutraliser cette cible. Un des problèmes qui se pose pour neutraliser efficacement la cible est la précision de la localisation. Plusieurs systèmes de l'art antérieur et par conséquent plusieurs types de dispositifs d'acquisition de cible ont été successivement développés permettant ainsi d'améliorer au fur et à mesure la précision de localisation de la cible. Le dispositif d'acquisition de cible selon l'invention permet au système d'estimation de trajectoire qui l'utilise d'améliorer encore et substantiellement cette précision de localisation.

Selon un premier art antérieur, il est connu d'utiliser un dispositif d'acquisition de cible comprenant une simple voie senseur optronique. L'aéronef embarquant un tel dispositif d'acquisition de cible comporte une centrale inertielle sur laquelle est recalée la voie senseur optronique. Ce premier art antérieur est peu précis à cause des problèmes de recalage de la voie senseur optronique sur la centrale inertielle de l'aéronef et à cause, notamment en cas de mission de longue durée, des problèmes de dérive de la centrale inertielle de l'aéronef.

Selon un deuxième art antérieur, il est connu d'utiliser un dispositif d'acquisition de cible comprenant une simple voie senseur optronique. L'aéronef embarquant un tel dispositif d'acquisition de cible comporte également une centrale inertielle mais la voie senseur optronique est recalée sur les étoiles du ciel lesquelles sont observées par l'intermédiaire de la voie senseur optronique. Toutefois, lors du mouvement de la ligne de visée de la voie senseur optronique lorsque celle-ci passe des étoiles à la cible, la précision supplémentaire qui avait été obtenue lors du recalage sur les étoiles est partiellement perdue. Ce deuxième art antérieur est également relativement peu précis, quoique que meilleur que le premier art antérieur car autonome par rapport à centrale inertielle. Par ailleurs, la centrale inertielle peut être recalée sur les étoiles, par l'intermédiaire de la voie senseur optronique.

L'objet de l'invention est de proposer un dispositif d'acquisition de cible qui permette une localisation très précise de ladite cible, au contraire des dispositifs de l'art antérieur. Le dispositif d'aquisition de cible selon l'invention est destiné à être monté sur un aéronef ou un aérostat, c'est-à-dire sur une plateforme aérienne évoluant ou stationnant dans les airs, par exemple du type avion, drône ou ballon, à l'exclusion des plateformes évoluant dans l'espace du type satellite lesquelles ne sont pas du tout soumises aux mêmes contraintes mécaniques, comme par exemple facteur de charge ou vibrations que les aéronefs. Un aéronef est soumis à des contraintes mécaniques bien plus importantes qu'un satellite dans la mesure où les conditions d'évolution ou d'environnement vibratoire d'un aéronef sont beaucoup plus sévères que celles d'un satellite. Le dispositif d'acquisition de cible selon l'invention, afin d'améliorer la précision de la localisation des cibles potentielles, comporte une voie senseur d'étoiles sur laquelle peut être très précisément recalée la voie senseur optronique. Dans le dispositif d'acquisition de cible selon l'invention, afin que la précision élevée acquise par le recalage de la voie senseur optronique sur la voie senseur d'étoiles ne puisse par être perdue par divers mouvements relatifs ou degrés de liberté d'une des voies par rapport à l'autre, lesdites voies sont rendues solidaires l'une de l'autre. Ainsi, grâce à la présence de la voie senseur d'étoiles et à la solidarité des voies senseur d'étoiles et senseur optronique, le système de stabilisation globale du dispositif d'acquisition de cible selon l'invention réalise un meilleur compromis entre la précision de stabilisation obtenue par ledit système et la complexité dudit système que les dispositifs d'acquisition de cible selon l'art antérieur.

Selon l'invention, il est prévu un dispositif d'acquisition de cible, étant destiné à être monté sur un aéronef, comportant une voie senseur optronique comprenant un détecteur et des moyens d'asservissement de la ligne de visée de la voie senseur optronique, caractérisé en ce que le dispositif d'acquisition de cible comporte également, une voie senseur d'étoiles comprenant un détecteur, des moyens de recalage de la ligne de visée de la voie senseur optronique sur la ligne de visée de la voie senseur d'étoiles, et en ce que la ligne de visée de la voie senseur d'étoiles est mécaniquement solidaire de la ligne de visée de la voie senseur optronique.

L'invention sera mieux comprise et d'autres particularités et avantages apparaîtront à l'aide de la description ci-après et des dessins joints, donnés à titre d'exemples, où :
- la figure 1 représente schématiquement un exemple d'aéronef intégrant un dispositif d'acquisition de cible selon l'invention ;
- la figure 2 représente schématiquement un exemple de dispositif d'acquisition de cible selon l'invention ;
- la figure 3 représente schématiquement un exemple préférentiel de dispositif d'acquisition de cible selon l'invention ;
- les figures 4 et 5 représentent schématiquement des diagrammes d'explication de la correspondance entre les pixels du détecteur de la voie senseur optronique et des pixels du détecteur de la voie senseur d'étoiles dans le cas d'une réalisation conforme à celle de la figure 3.

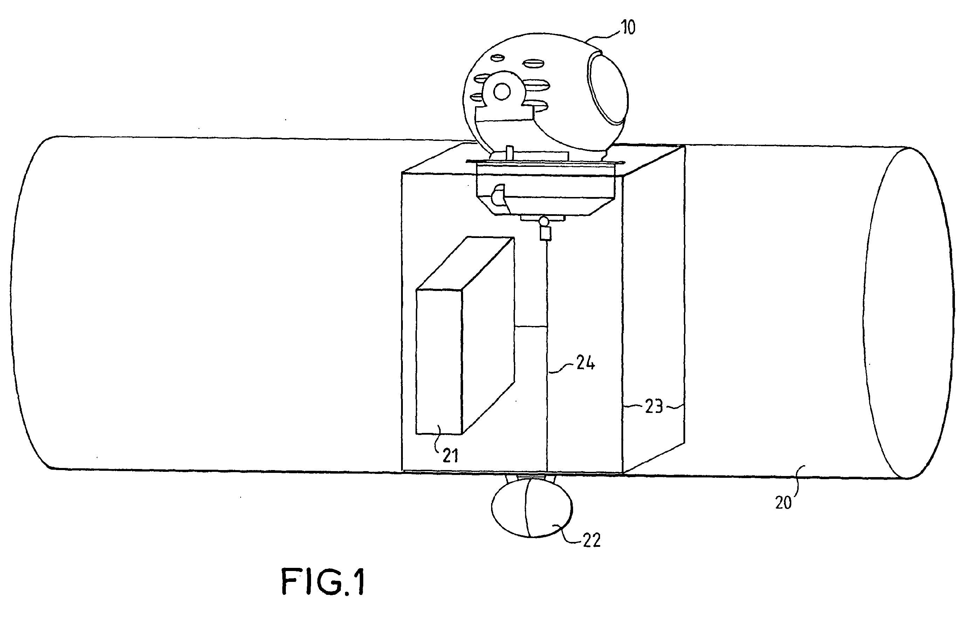

La figure 1 représente schématiquement un exemple d'aéronef intégrant un dispositif d'acquisition de cible selon l'invention. Cet aéronef est préférentiellement un aéronef de surveillance. L'aéronef de surveillance est par exemple un drone de surveillance dont seulement une portion de la surface extérieure 20 est représentée sur la figure 1 pour des raisons de clarté. Le dispositif 10 d'acquisition de cible selon l'invention est une boule de poursuite dans laquelle sont intégrées une voie senseur optronique et une voie senseur d'étoiles. La boule 10 de poursuite est située sur la surface extérieure 20 du drone. Le drone comporte également sur sa surface extérieure 20, mais placé de l'autre côté du drone, un dispositif 22 de veille, également en forme de boule, qui est une boule de veille. Des moyens de communication 24, situés à l'intérieur du drone, relient le dispositif 10 d'acquisition de cible au dispositif 22 de veille. Des moyens de reconstruction 21 de trajectoire de cible sont également reliés aux moyens de communication 24 et sont également situés dans le drone. Les moyens de reconstruction 21 pourraient aussi être situés dans une station au sol. Une structure 23 mécaniquement rigide assure le maintien de la position relative de la boule 10 de poursuite et de la boule 22 de veille.

Le dispositif d'acquisition de cible selon l'invention est destiné à être monté sur un aéronef. Cet aéronef est par exemple un drone de surveillance comme sur la figure 1. Cet aéronef peut aussi être un avion de chasse. En effet, le facteur de charge sur un avion de chasse habituellement élevé à cause des évolutions rapides de l'avion de chasse dégraderait de manière encore plus importante que sur un drone de surveillance la précision de localisation. Cependant, avec le dispositif d'acquisition de cible selon l'invention, la solidarité mécanique existant entre la voie senseur optronique et la voie senseur d'étoiles rend la précision de localisation cherchée compatible avec l'emploi d'un avion de chasse à facteur de charge élevé. En effet, les voies senseur d'étoiles et senseur optronique sont mécaniquement liées entre elles de manière suffisamment rigide pour que la ligne de visée de la voie d'observation et la ligne de visée de la voie viseur d'étoiles soient immobiles l'une par rapport à l'autre. L'emploi d'un avion de chasse présente également l'avantage de ne pas nécessiter d'aéronef supplémentaire pour réaliser l'interception de la cible volante. Le dispositif d'acquisition de cible selon l'invention peut être monté sur un avion de chasse en raison de sa grande compacité, notamment lorsqu'il consiste en une boule de poursuite dans laquelle sont intégrées la voie senseur optronique et la voie senseur d'étoiles.

L'altitude d'évolution de l'aéronef sur lequel est monté le dispositif d'acquisition de cible selon l'invention est de préférence une altitude d'une part pour laquelle le rapport signal à bruit des différentes voies, à savoir la voie senseur optronique et la voie senseur d'étoiles, est suffisamment important pour permettre au dispositif d'acquisition de cible d'accrocher une cible et en particulier une cible volante, pour permettre à la voie senseur d'étoiles d'acquérir les étoiles, et d'autre part à laquelle plusieurs types usuels d'aéronef peuvent évoluer. Une altitude d'environ 40000 pieds représente alors un bon compromis.

De préférence, l'aéronef comporte un dispositif de veille ainsi que des moyens de communication entre le dispositif d'acquisition de cible et le dispositif de veille, lesdits moyens de communication permettant au dispositif d'acquisition de cible de s'accrocher, successivement dans le temps, sur plusieurs cibles et de revenir régulièrement s'accrocher sur chacune desdites cibles. A chaque fois que le dispositif d'acquisition de cible revient s'accrocher sur une cible, les images qu'il prend permettent une estimation fine de plusieurs positions de ladite cible, lesdites positions étant ensuite utilisées par des moyens d'estimation de trajectoire pour reconstituer la trajectoire de ladite cible. Ce fonctionnement avec retours ponctuels de l'aéronef sur cible, permet au même aéronef de partager son temps d'acquisition de cible entre plusieurs cibles évoluant simultanément dans le champ.

Le dispositif d'acquisition de cible doit rechercher la cible et l'acquérir à partir d'une désignation d'objectif initiale fournie en coordonnées absolues ou en site et en gisement. Pour cela, le dispositif d'acquisition de cible est accroché sur une désignation d'objectif donnant la position estimée en site et en gisement de la cible sur laquelle le dispositif d'acquisition de cible doit ensuite effectivement s'accrocher. Pour cela, la désignation d'objectif peut aussi parfois fournir la vitesse angulaire estimée de la cible. La désignation d'objectif peut être fournie soit par un dispositif de veille intégré à l'aéronef soit par une station au sol. Dans le cas où la désignation d'objectif est fournie par un dispositif de veille intégré à l'aéronef, l'estimation de position voire de vitesse angulaire est grossière et va justement être affinée par l'intermédiaire des images prises par les voies du dispositif d'acquisition de cible. Dans le cas où la désignation d'objectif est fournie par une station au sol, l'estimation de position voire de vitesse angulaire a été effectuée par reconstruction de trajectoire de la cible obtenue par une extrapolation à l'instant présent de positions voire de vitesses elles-mêmes obtenues à partir des informations fournies précédemment par les dispositifs d'acquisition de cible et de veille d'un ou de plusieurs aéronefs de surveillance (dont éventuellement celui auquel est fournie la désignation d'objectif).

A partir de la désignation d'objectif le dispositif d'acquisition de cible peut s'accrocher sur la cible à condition d'une part que la cible soit vue dans le champ de la voie senseur optronique du dispositif d'acquisition de cible, ce qui impose pour une acquisition sans recherche audit champ d'être supérieur à deux fois la précision angulaire de la désignation d'objectif majorée du défilement de la cible, et d'autre part que les rapports signal à bruit sur les voies senseur optronique et senseur d'étoiles du dispositif d'acquisition de cible soient suffisants, un rapport signal à bruit, dont la valeur est comprise entre deux et dix par exemple, étant usuel.

Le dispositif d'acquisition de cible selon l'invention est préférentiellement destiné à être utilisé dans un aéronef de surveillance faisant lui-même avantageusement partie d'un système d'estimation de trajectoire des cibles.

Dans un mode de réalisation préférentiel, le système d'estimation de trajectoire d'une cible comporte un seul aéronef de surveillance lequel comporte un télémètre. Le système d'estimation comporte aussi des moyens de reconstruction de la trajectoire de la cible à partir des images fournies par l'aéronef et à partir des mesures de télémétrie.

Dans un autre mode de réalisation préférentiel, le système d'estimation de trajectoire d'une cible comporte au moins deux aéronefs de surveillance. Le système d'estimation comporte aussi des moyens de reconstruction de la trajectoire de la cible par triangulation à partir des images fournies par les différents aéronefs.

Ces deux modes de réalisation préférentiels permettent au système d'estimation de la trajectoire des cibles, notamment volantes, de tirer pleinement profit de la précision apportée par les images fournies par le dispositif d'acquisition de cible selon l'invention. La précision serait légèrement dégradée en l'absence à la fois de télémètre et de triangulation ou bien en l'absence de moyens équivalents permettant d'ajouter des mesures de distance aux mesures angulaires provenant des images fournies par les voies du dispositif d'acquisition de cible. Les moyens de reconstruction de trajectoire de cibles peuvent être situés par exemple, soit sur le ou les aéronefs de surveillance eux-mêmes, soit au niveau d'une station au sol, soit en partie au niveau de la station au sol et en partie au niveau du ou des aéronefs de surveillance. Ces moyens de reconstruction incluent notamment des bases de données concernant les éphémérides des étoiles correspondant à la portion de champ où sont censées évoluer la ou les cibles.

Le système d'estimation de trajectoire de cible peut par exemple faire partie d'un système plus global de défense active intégrant au moins un aéronef d'interception auquel est fournie au moins une portion de la trajectoire estimée par le système d'estimation. Grâce à cette portion de trajectoire estimée, l'aéronef d'interception est guidé vers la cible jusqu'à ce qu'il puisse enclencher son propre système de guidage terminal. L'interception aura généralement lieu après la rentrée dans l'atmosphère pour un missile balistique. En cas de système de défense passive, c'est-à-dire ne comportant pas d'aéronef d'interception, la défense passive consistant alors par exemple à mettre les populations civiles aux abris, la localisation de la cible volante par l'intermédiaire du système d'estimation de trajectoire rend inutile les systèmes au sol de détection radar très grande portée contre les missiles balistiques notamment. Le système d'estimation de trajectoire selon l'invention a par ailleurs une portée bien supérieure à un système de détection radar très grande portée. Dans l'exemple d'un missile balistique de portée valant environ 1500km et de temps de vol valant environ 10min, le système de radar très grande portée va détecter le missile environ 2min avant impact tandis que le système d'estimation de trajectoire peut détecter le même missile dans certaines conditions jusqu'à environ 8min avant impact, ce qui facilite beaucoup la tâche du système de défense associé, que celui-ci soit actif ou passif.

La durée de la mission d'un aéronef de surveillance au sein d'un système de défense peut être longue, par exemple de l'ordre d'une journée, des missions de l'ordre d'une semaine ou d'un mois pouvant même être envisagées. En effet, la localisation de cible à partir des images fournies par les voies du dispositif d'acquisition de cible conserve une bonne précision indépendamment des dérives au cours du temps de la centrale inertielle de l'aéronef, laquelle centrale inertielle peut même alors être recalée sur la voie senseur d'étoiles au cours de la mission. En cas de recalage du dispositif d'acquisition de cible sur les centrales inertielles actuelles d'aéronef, comme dans l'art antérieur, seules des missions de quelques heures au plus seraient envisageables.

Le type de cibles volantes poursuivies par le dispositif d'acquisition de cible selon l'invention est de préférence le missile balistique. Le dispositif d'acquisition de cible et le système d'estimation de trajectoire selon l'invention peuvent aussi être utilisés contre d'autres types de cibles volantes comme les satellites espions ou les avions évoluant à haute altitude. Le dispositif d'acquisition de cible et le système d'estimation de trajectoire selon l'invention peuvent aussi être utilisés contre d'autres types de cibles comme les cibles maritimes ou les cibles terrestres, les cibles terrestres étant alors avantageusement des cibles fixes ou déplaçables, par exemple du type quartier général ou bien du type lanceur de missile balistique.

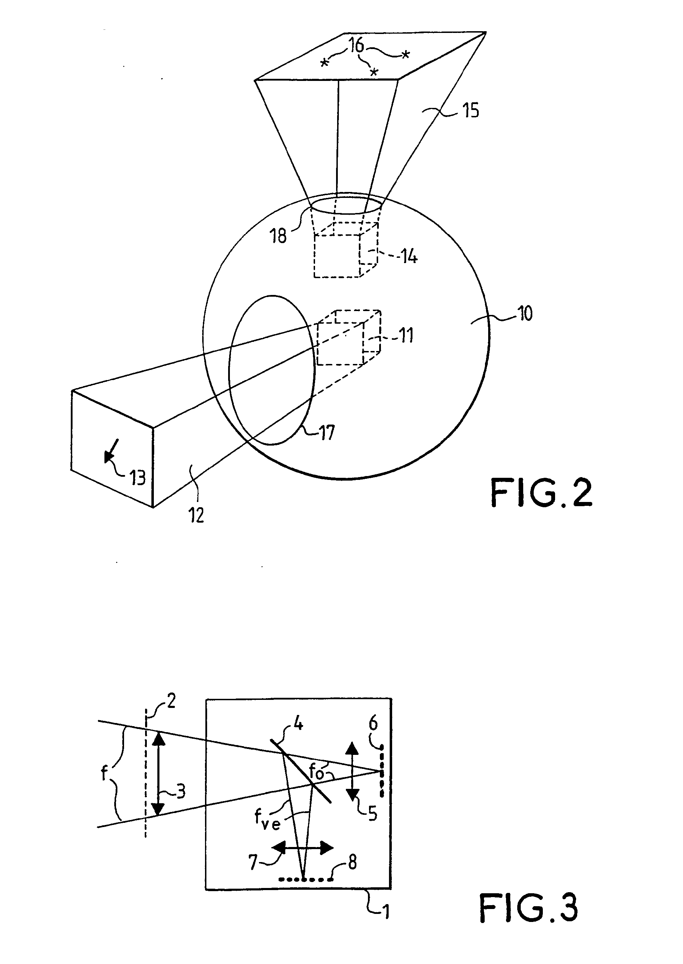

La figure 2 représente schématiquement un exemple de dispositif d'acquisition de cible selon l'invention. Le dispositif d'acquisition de cible selon l'invention représenté à la figure 2 est de préférence destiné à l'acquisition de cibles terrestres ou navales : en effet, la voie senseur d'étoiles regarde vers le ciel tandis que la voie senseur optronique regarde vers la terre ou vers les couches basses de l'atmosphère. Le dispositif d'acquisition de cible selon l'invention se présente sous la forme d'une boule 10 de poursuite. Une fois montée sur un aéronef de surveillance, la boule possède au moins deux degrés de liberté en rotation par rapport à la structure de l'aéronef de surveillance, afin de pouvoir balayer une portion substantielle de l'espace comme par exemple un demi-espace. La voie senseur optronique dont le champ 12 de vue englobe la cible 13 comporte un senseur 11 optronique par exemple de type caméra d'observation. Le champ (15) du détecteur (8) de la voie senseur d'étoiles est préférentiellement suffisamment grand pour voir en permanence au moins deux étoiles, ce qui permet de déterminer le roulis de la voie senseur d'étoiles et ce qui est particulièrement intéressant compte tenu du fait que les lignes de visée des voies senseur d'étoiles et senseur optronique ne sont pas colinéairement harmonisées dans l'exemple représenté à la figure 2. La voie senseur d'étoiles dont le champ 15 de vue englobe plusieurs étoiles 16 comporte un senseur 14 d'étoiles. La position relative des champs 12 et 15 dans l'espace est conservée grâce à la rigidité de la liaison mécanique entre les voies senseur optronique et senseur d'étoiles. Sur la figure 2, cette rigidité mécanique provient de la boule 10 elle-même très rigide et athermalisée de surcroît, boule 10 à laquelle sont également mécaniquement rigidement fixés les différents éléments desdites voies. Des ouvertures 17 et 18 sont pratiquées dans la boule 10 afin que les champs 12 et 15 de vue respectivement des voies senseur optronique et senseur d'étoiles ne soient pas obstrués par les parois de la boule 10. Sur la figure 2, la position des différentes voies est telle que les directions dans lesquelles regardent lesdites voies ne sont pas alignées, c'est-à-dire que les lignes de visée des différentes voies ne sont pas alignées. De préférence, les lignes de visée des voies senseur d'étoiles et senseur optronique sont disposées sensiblement à angle droit l'une de l'autre, afin de permettre les visées rasantes de la voie senseur optronique tout en limitant les erreurs de localisation liées à la diffraction dans les couches de l'atmosphère.

Le dispositif d'acquisition de cible selon l'invention comporte une voie senseur d'étoiles ayant un détecteur matriciel avec une ligne de visée et un champ associés ainsi qu'une voie senseur optronique ayant un détecteur matriciel avec une ligne de visée et un champ associés. De manière préférentielle, à tout pixel d'un détecteur matriciel d'une des voies correspond de manière bijective un pixel du champ de ladite voie, ladite correspondance étant effectuée par l'optique de ladite voie située en amont dudit détecteur, ledit pixel de champ correspondant à la fois à une portion angulaire de l'espace situé en face de la surface sensible dudit détecteur et à un pixel de l'image de l'espace obtenue par ledit détecteur. La voie senseur optronique et la voie senseur d'étoiles sont de préférence mécaniquement liées entre elles de manière suffisamment rigide pour que la ligne de visée de la voie senseur optronique et la ligne de visée de la voie senseur d'étoiles soient immobiles l'une par rapport à l'autre de sorte que la position relative des pixels du champ de la voie senseur optronique et des pixels du champ de la voie senseur d'étoiles soit conservée. La position relative des pixels est conservée si l'amplitude du mouvement relatif infime pouvant exister entre les lignes de visée des différentes voies ne dépasse pas, au niveau de chaque champ de détecteur de l'une des dites voies, le champ de détecteur de l'autre voie étant alors prise comme référence, la taille d'un demi pixel.

Dans le cas préférentiel décrit ultérieurement de la figure 3, la conservation préférentielle de la position relative des pixels du champ de la voie senseur optronique et des pixels du champ de la voie senseur d'étoiles se traduit par le maintien d'une correspondance existante entre les pixels du détecteur de la voie senseur optronique et des pixels du détecteur de la voie senseur d'étoiles. La correspondance existante est maintenue si par exemple lorsqu'un pixel pi donné du détecteur de la voie senseur optronique correspond à un pixel pj donné du détecteur de la voie senseur d'étoiles, c'est-à-dire lorsque les pixels pi et pj correspondent tous deux à la même portion angulaire de l'espace, alors le pixel pi correspond toujours au pixel pj quels que soient les mouvements absolus de l'aéronef, puisque les lignes de visée des différentes voies restent immobiles l'une par rapport à l'autre. La correspondance existante est maintenue si par exemple lorsqu'un ensemble de pixels pk donnés du détecteur de la voie senseur optronique correspond à un pixel pj donné du détecteur de la voie senseur d'étoiles, alors l'ensemble de pixels pk correspond toujours au pixel pj quels que soient les mouvements absolus de l'aéronef, puisque les lignes de visée des différentes voies restent immobiles l'une par rapport à l'autre, et vice-versa.

Cette immobilité relative de la ligne de visée d'une des voies par rapport à la ligne de visée de l'autre voie permet de monter le dispositif d'acquisition de cible selon l'invention sur des aéronefs sujets à des couples perturbateurs nettement plus importants que ceux avec lesquels étaient compatibles les dispositifs de l'art antérieur sans dégrader la précision et sans requérir de système de stabilisation plus perfectionné que dans l'art antérieur.

Une autre cause d'imprécision pourrait être la faiblesse de la cadence de rafraîchissement de la voie senseur d'étoiles laquelle cadence de rafraîchissement est généralement plus faible que la cadence image de la voie senseur optronique. Ainsi, une image obtenue par la voie senseur d'étoiles à un instant donné sert bien sûr à recaler l'image obtenue au même instant par la voie senseur optronique mais également plusieurs images obtenues par la voie senseur optronique à des instants voisins de l'instant donné. Afin de diminuer voire d'éliminer cette cause d'imprécision, des moyens de calcul procédent à des interpolations. Afin de diminuer de manière simple les erreurs entraînées par les interpolations, la voie senseur optronique et la voie senseur d'étoiles ont préférentiellement chacune une cadence image dont l'une est un multiple de l'autre. Afin de supprimer de manière simple les erreurs entraînées par les interpolations, la voie senseur optronique et la voie senseur d'étoiles ont la même cadence image et sont temporellement synchronisées. Dans ce dernier cas avantageux, la similitude des cadences image entre les différentes voies et leur synchronisation temporelle, permet, sans nécessiter de calculs d'interpolation, de conserver la précision obtenue en associant à chaque image de la voie senseur optronique une image temporellement simultanée de la voie senseur d'étoiles permettant ainsi un recalage très précis de l'image de la voie senseur optronique sur l'image de la voie senseur d'étoiles laquelle image de la voie senseur d'étoiles comporte généralement plusieurs étoiles de référence dont la position dans l'espace est très précisément connue grâce à des bases de données contenant les éphémérides de ces étoiles de référence.

Avec ou sans calculs d'interpolation, grâce au dispositif d'acquisition de cible selon l'invention, la précision de la position angulaire d'une cible volante visible sur plusieurs images de la voie senseur optronique sera très élevée et ceci pour toutes les images concernées, permettant ainsi une reconstruction très précise de la trajectoire de la cible volante. A titre d'exemple, avec des détecteurs de l'ordre de 320 par 240 pixels, la précision de la position angulaire d'une cible volante peut atteindre 30µrad.

Le dispositif d'acquisition de cible selon l'invention est préférentiellement une boule de poursuite et les deux voies sont avantageusement intégrées à l'intérieur de la boule. Ainsi, la rigidité de la liaison mécanique entre les différentes voies peut être obtenue plus facilement. Le dispositif d'acquisition de cible selon l'invention peut aussi être intégré dans une nacelle ou même être disposé à l'intérieur de l'aéronef sur lequel il est monté en cas d'absence de nacelle.

Le dispositif d'acquisition de cible selon l'invention possède des moyens d'asservissement de la voie senseur optronique dans une direction déterminée. Cette direction déterminée peut être choisie de plusieurs manières.

Dans un premier mode de réalisation, les moyens d'asservissement de la voie senseur optronique asservissent la ligne de visée de la voie senseur optronique sur la cible. Un avantage de ce premier mode de réalisation est l'absence de filé vitesse sur la cible, ce qui améliore le rapport signal à bruit et permet une meilleure localisation de la cible dans le repère de la voie senseur optronique. Un inconvénient de ce premier mode de réalisation est la présence d'un filé vitesse sur les étoiles, ce qui dégrade le rapport signal à bruit et entraîne une moins bonne localisation des étoiles dans le repère de la voie senseur d'étoiles.

Dans un deuxième mode de réalisation, les moyens d'asservissement de la voie senseur optronique asservissent la ligne de visée de la voie senseur optronique sur les étoiles du ciel. Un avantage de ce deuxième mode de réalisation est l'absence de filé vitesse sur les étoiles, ce qui améliore le rapport signal à bruit et permet une meilleure localisation des étoiles dans le repère de la voie senseur d'étoiles. Un inconvénient de ce deuxième mode de réalisation est la présence d'un filé vitesse sur la cible, ce qui dégrade le rapport signal à bruit et entraîne une moins bonne localisation de la cible dans le repère de la voie senseur optronique. Dans le cas décrit ultérieurement d'un détecteur unique pour les deux voies alors alignées, le filé vitesse sur la cible est moins gênant que le filé vitesse sur les étoiles, par conséquent ce deuxième mode de réalisation est alors préférable.

La figure 3 représente schématiquement un exemple préférentiel de dispositif d'acquisition de cible selon l'invention. Le dispositif d'acquisition de cible selon l'invention représenté sur la figure 3 est de préférence destiné à l'acquisition de cibles volantes, c'est-à-dire aériennes et spatiales, et notamment les cibles volantes évoluant en haute altitude. Dans la suite de la description de la figure 3, sauf mention contraire, une optique peut désigner aussi bien un simple élément optique comme par exemple une lentille qu'une combinaison optique complexe comportant plusieurs éléments optiques. Le dispositif d'acquisition de cible selon l'invention se présente sous la forme d'une boule 10 de poursuite dont seulement une portion est représentée sur la figure 3 pour des raisons de clarté. Une fois montée sur un aéronef de surveillance, la boule 10 possède au moins deux degrés de liberté en rotation par rapport à la structure de l'aéronef de surveillance, afin de pouvoir balayer une portion substantielle de l'espace comme par exemple un demi-espace. Le bloc 1, appelé bloc 1 capteur, représente de manière symbolique la rigidité de la liaison mécanique entre la voie senseur optronique d'une part et la voie senseur d'étoiles d'autre part. La voie senseur optronique comporte, successivement de l'extérieur de la boule 10 vers l'intérieur de la boule 10, un filtre vertical 2 dont le fonctionnement sera explicité ultérieurement, une optique 3 d'entrée, un séparateur 4 de faisceaux, une optique 5 de focalisation, un détecteur 6. La voie senseur d'étoiles comporte, successivement de l'extérieur de la boule 10 vers l'intérieur de la boule 10, un filtre vertical 2 dont le fonctionnement sera explicité ultérieurement, une optique 3 d'entrée, un séparateur 4 de faisceaux, une optique 7 de focalisation, un détecteur 8. Le filtre 2, l'optique 3 d'entrée et le séparateur 4, sont communs aux deux voies sur la figure 3, ce qui n'est pas obligatoire mais préférable en raison du fait qu'un élément commun aux deux voies contribue par construction à l'amélioration de la rigidité de la liaison mécanique entre lesdites voies. Le faisceau f arrivant de l'extérieur entre dans la boule 10 en traversant successivement le filtre 2 et l'optique 3 d'entrée pour arriver sur le séparateur 4 qui est par exemple une simple lame semi-réfléchissante. Le séparateur 4 sépare le faisceau f en deux faisceaux, un faisceau fo se propageant en direction du détecteur 6 de la voie senseur optronique et un faisceau fve se propageant en direction du détecteur 8 de la voie senseur d'étoiles. Le faisceau fo est focalisé par l'optique 5 de focalisation sur le détecteur 6 tandis que le faisceau fve est focalisé par l'optique 7 de focalisation sur le détecteur 8.

Que les lignes de visée des voies senseur d'étoiles et senseur optronique soient colinéairement harmonisées ou non, le détecteur 8 de la voie senseur d'étoiles est préférentiellement disposé de manière à obtenir une image défocalisée des étoiles afin que l'image de chaque étoile recouvre plusieurs pixels dudit détecteur 8. Dans le cas d'étoiles émettant beaucoup de lumière, une localisation précise de la ligne de visée de la voie senseur d'étoiles par rapport aux étoiles observées est ainsi plus aisée à obtenir.

Le dispositif d'acquisition de cible selon l'invention comporte préférentiellement au moins un filtre polarisant rectiligne qui est disposé de manière à ce que, lors de l'acquisition d'une cible volante, la composante de polarisation rectiligne horizontale de la lumière qui arrive sur le détecteur de l'une des voies, avantageusement de chacune des voies, soit substantiellement plus atténuée que la composante de polarisation rectiligne verticale de la lumière qui arrive sur le détecteur de ladite voie, avantageusement de chacune des voies. Ce filtre est appelé filtre vertical, la figure 3 présente un filtre vertical 2. La cible volante est le plus souvent détectée sur un fond de ciel non structuré, c'est-à-dire que la partie inférieure du champ du détecteur de la voie senseur optronique pointe au-dessus du plafond nuageux. Néanmoins, la lumière provenant du soleil pendant le jour et se réfléchissant sur les nuages ou limbes est diffusée par ces nuages ou limbes sous forme de lumière polarisée plutôt horizontalement. La fonction du filtre vertical 2 est par conséquent d'augmenter le rapport signal à bruit en arrêtant, avant son arrivée sur les détecteurs, la lumière polarisée horizontalement.

De préférence, au moins une partie de la ligne de visée de la voie senseur d'étoiles et une partie de la ligne de visée de la voie senseur optronique sont alignées l'une sur l'autre et la conservation de la position relative des pixels du champ de la voie senseur optronique et des pixels du champ de la voie senseur d'étoiles se traduit par le maintien d'une correspondance existante entre les pixels du détecteur matriciel de la voie senseur optronique et des pixels du détecteur matriciel de la voie senseur d'étoiles.

La direction d'observation des détecteurs 6 et 8 étant alors la même, les voies senseur optronique et senseur d'étoiles sont par conséquent alignées, c'est-à-dire colinéairement harmonisées. Ainsi, notamment dans le cas d'angles de vue pouvant être très rasants par rapport à l'atmosphère, grâce à l'auto-compensation des dispersions de propagation sur le trajet, lesdites dispersions étant liées à la traversée des différentes couches atmosphériques, la trajectoire sinueuse des rayons lumineux n'est plus source d'erreurs de localisation importantes. Les voies senseur optronique et senseur d'étoiles présentent même sur la figure 3 une pupille commune, ce qui réduit encore les erreurs d'harmonisation entre lesdites voies. L'optique de la pupille commune peut toutefois être multichamp et/ou multispectrale dans le cas où les détecteurs desdites voies n'ont pas le même champ et/ou pas le même domaine spectral de sensibilité. Lesdites voies peuvent également avoir des pupilles séparées, ce qui est moins avantageux au niveau de la rigidité mécanique de la liaison entre lesdites voies, mais ce qui peut être plus simple à mettre en oeuvre dans le cas de détecteurs de champs différents et/ou de domaines spectraux de sensibilité différents pour les deux voies dans la mesure où cela dispense d'une optique multichamp et/ou multispectrale. A moins d'utiliser des détecteurs ayant un très grand nombre de pixels, par exemple plusieurs millions, pour une meilleure précision, la voie senseur d'étoiles possède préférentiellement un champ plus grand que celui de la voie senseur optronique.

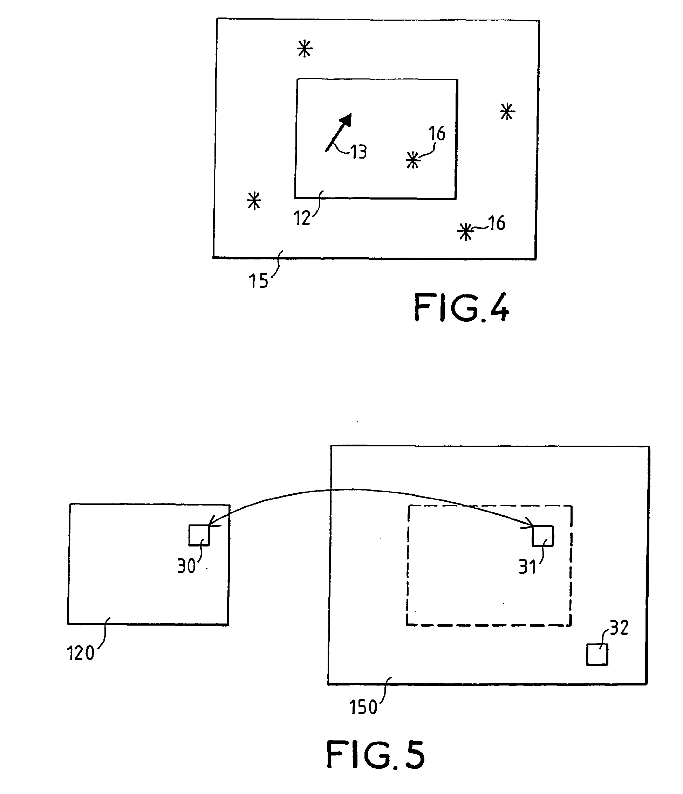

La conservation préférentielle de la position relative des pixels du champ de la voie senseur optronique et des pixels du champ de la voie senseur d'étoiles se traduit par le maintien d'une correspondance existante entre les pixels du détecteur de la voie senseur optronique et des pixels du détecteur de la voie senseur d'étoiles. Les figures 4 et 5 représentent schématiquement des diagrammes d'explication de cette correspondance. Une cible 13, représentée sous la forme d'une flèche droite, est contenue dans le champ 12 de la voie senseur optronique. Plusieurs étoiles 16, respectivement représentées sous la forme d'astérisques, sont contenues dans le champ 15 de la voie senseur d'étoiles. Sur la figure 4 et de manière préférentielle, le champ 15 de la voie senseur d'étoiles englobe le champ 12 de la voie senseur optronique. La figure 5 montre, à l'aide d'une flèche courbe, la correspondance existant entre un ou plusieurs pixels donnés de la surface 120 sensible du détecteur 6 de la voie senseur optronique, représenté(s) sur la figure 5 par la zone 30 et représentant un secteur angulaire SA, de l'espace, appartenant au champ 12, et un ou plusieurs pixels donnés de la surface 150 sensible du détecteur 8 de la voie senseur d'étoiles, représenté(s) sur la figure 5 par la zone 31 et représentant le même secteur angulaire SA, de l'espace, appartenant au champ 15. Les traits pointillés sur la surface sensible 150 de la figure 5 délimitent une zone de pixels ayant des correspondants sur la surface sensible 120. La liaison mécanique entre la voie senseur optronique et la voie senseur d'étoiles est suffisamment rigide pour que d'une part, dans le cas où la zone 30 continue à représenter le secteur angulaire SA, alors la zone 31 continue aussi à représenter le secteur angulaire SA, et pour que d'autre part, dans le cas où la zone 30 se met à représenter un autre secteur angulaire aSA, alors la zone 31 se met à représenter aussi ce même secteur angulaire aSA : pour cela, le décalage relatif entre le champ 12 et le champ 15 ne doit alors excéder ni la moitié de la taille d'un pixel de la surface sensible 120 du détecteur 6, ni la moitié de la taille d'un pixel de la surface sensible 150 du détecteur 8. Les pixels des détecteurs 6 et 8 n'ont pas nécessairement la même taille, mais c'est préférable. Dans le cas préférentiel où le champ 15 est supérieur au champ 12, d'une part certains pixels de la surface sensible 150 du détecteur 8, comme le pixel 32, n'ont pas de correspondants sur la surface sensible 120 du détecteur 6, et d'autre part un groupe de plusieurs pixels donnés (ou une fonction, telle que combinaison linéaire par exemple, des pixels de ce groupe) de la surface sensible 120 du détecteur 6 de la voie senseur optronique correspond à un seul pixel de la surface 150 du détecteur 8 de la voie senseur d'étoiles. Le réglage de cette correspondance peut généralement être fait une fois pour toutes et non nécessairement en usine.

Le dispositif d'acquisition de cible selon l'invention est généralement athermalisé pour que les différences de température ne perturbent pas la correspondance entre les pixels des détecteurs des différentes voies. Le matériau employé pour cette athermalisation est par exemple de l'INVAR. Le dispositif d'acquisition de cible selon l'invention se présente préférentiellement sous la forme d'une boule intégrant les voies senseur optronique et senseur d'étoiles. La boule, étant relativement compacte, peut être plus aisément athermalisée. La boule a par exemple environ 400mm de diamètre.

De préférence, les détecteurs respectifs des différentes voies ont un domaine spectral de sensibilité qui est sinon identique du moins voisin. Ainsi, la corrélation entre les images fournies par les différentes voies est plus aisée à réaliser au niveau du système d'estimation de trajectoire englobant le dispositif d'acquisition de cible selon l'invention.

Afin que le dispositif d'acquisition de cible selon l'invention puisse conserver cette précision de localisation de cible aussi bien en mode de fonctionnement pendant le jour qu'en mode de fonctionnement pendant la nuit, le détecteur de la voie senseur d'étoiles est choisi de manière à ce que son domaine spectral de sensibilité soit au moins partiellement dans l'infrarouge, même si l'infrarouge est situé en queue du spectre d'émission des étoiles, c'est-à-dire dans une partie relativement peu intense de ce spectre d'émission, la disponibilité de détecteurs très sensibles dans l'infrarouge permettant de réduire sensiblement cet inconvénient ; ainsi, le dispositif d'acquisition de cible selon l'invention s'affranchit-il du bruit de fond constitué par la diffusion solaire.

Afin de rester plus précis et de s'affranchir plus complétement à la fois de la diffusion solaire et du flux thermique des éléments optiques de la voie senseur d'étoiles, le dispositif d'acquisition de cible selon l'invention comporte un détecteur de la voie senseur d'étoiles dont le domaine spectral de sensibilité comprend au moins une partie de la bande II de l'infrarouge.

En effet, les bandes I et II de l'infrarouge sont meilleures pour la voie senseur d'étoiles tandis que les bandes II et III de l'infrarouge sont généralement meilleures pour la voie senseur optronique. Dans le cas où les cibles sont des missiles balistiques, pour la voie senseur optronique, la bande II peut être meilleure en début de phase balistique du missile lorsque celui-ci est encore chaud tandis que la bande III peut être meilleure en fin de phase balistique du missile lorsque celui-ci est déjà froid. Au moins une partie de la bande II de l'infrarouge est préférentiellement incluse dans le domaine de sensibilité du détecteur de chacune des voies. Ainsi, le dispositif d'acquisition de cible selon l'invention permet de résoudre au moins en partie le paradoxe de pouvoir « voir des étoiles en plein jour tout en étant proche du soleil ». De plus, en bande II de l'infrarouge, le flux thermique des éléments optiques des voies est faible.

Préférentiellement, le domaine de sensibilité des détecteurs des différentes voies a une limite inférieure valant sensiblement 1µm et une limite supérieure sensiblement comprise entre 2,5µm et 4µm. La limite inférieure valant sensiblement 1µm représente un optimal dans la mesure où le bruit de fond augmente avec la diffusion solaire en dessous de cette limite inférieure. Au-delà d'une limite supérieure valant sensiblement 4µm, le flux thermique des éléments optiques des voies ainsi que de l'atmosphère augmente sensiblement. De préférence, les détecteurs sont des détecteurs de forte sensibilité tels que MCT, InSb ou MPQ. Ces détecteurs possèdent avantageusement au minimum 640x480 pixels.

Une première option consiste à utiliser pour les deux voies un détecteur unique au lieu des deux détecteurs précédemment décrits et répartis un par voie. Dans ce cas, le détecteur de la voie senseur d'étoiles et le détecteur de la voie senseur optronique sont confondus en un seul et même détecteur. Pour obtenir une très bonne précision de localisation de la cible, ce détecteur unique possède préférentiellement plusieurs millions de pixels.

Une deuxième option consiste à utiliser pour chacune des voies, deux détecteurs au lieu d'un détecteur. Dans ce cas, la voie senseur d'étoiles possède deux détecteurs, de préférence l'un sensible dans le visible et l'autre dans au moins une partie de l'infrarouge, et la voie senseur optronique possède deux détecteurs, de préférence l'un sensible dans la bande II de l'infrarouge et l'autre sensible dans la bande III de l'infrarouge. L'optique d'entrée de la voie senseur optronique au moins ou bien, le cas échéant, l'optique commune aux deux voies, est alors multispectrale.

## Revendications

1. Dispositif d'acquisition de cible (13), destiné à être monté sur un aéronef ou sur un aérostat, comportant une voie senseur optronique pour l'acquisition d'une cible comprenant un détecteur (6) et des moyens d'asservissement de la ligne de visée de la voie senseur optronique, la voie senseur optronique étant recalée sur les étoiles du ciel pour assurer la localisation de la cible, **caractérisé en ce que** le dispositif d'acquisition de cible (13) comporte pour ledit recalage une voie senseur d'étoiles comprenant un détecteur (8), et une liaison mécanique rigide entre les lignes de visée des voies senseur d'étoiles et senseur optronique.

2. Dispositif d'acquisition de cible selon la revendication 1, **caractérisé en ce que** les détecteurs (6, 8) des voies senseur d'étoiles et senseur optronique sont matriciels, **en ce qu'**au moins une partie de la ligne de visée de la voie senseur d'étoiles et une partie de la ligne de visée de la voie senseur optronique sont alignées l'une sur l'autre, et **en ce que** la liaison mécanique entre les lignes de visée des voies senseur d'étoiles et senseur optronique est suffisamment rigide pour maintenir la correspondance existant entre les pixels (30) du détecteur (6) de la voie senseur optronique et des pixels (31) du détecteur (8) de la voie senseur d'étoiles.

3. Dispositif d'acquisition de cible selon la revendication 2, **caractérisé en ce que** le dispositif d'acquisition de cible comporte une seule optique d'entrée laquelle est commune aux voies senseur d'étoiles et senseur optronique.

4. Dispositif d'acquisition de cible selon la revendication 1, **caractérisé en ce que** les lignes de visée des voies senseur d'étoiles et senseur optronique sont disposées sensiblement à angle droit l'une de l'autre.

5. Dispositif d'acquisition de cible selon la revendication 4, **caractérisé en ce que** le champ (15) du détecteur (8) de la voie senseur d'étoiles est suffisamment grand pour voir en permanence au moins deux étoiles.

6. Dispositif d'acquisition de cible selon l'une quelconque des revendications précédentes, **caractérisé en ce que** la voie senseur optronique et la voie senseur d'étoiles ont chacune une cadence image dont l'une est un multiple de l'autre.

7. Dispositif d'acquisition de cible selon la revendication 6, **caractérisé en ce que** la voie senseur optronique et la voie senseur d'étoiles ont la même cadence image et sont temporellement synchronisées.

8. Dispositif d'acquisition de cible selon l'une quelconque des revendications précédentes, **caractérisé en ce que** le détecteur (8) de la voie senseur d'étoiles est matriciel et **en ce que** ledit détecteur (8) est disposé de manière à obtenir une image défocalisée des étoiles afin que l'image de chaque étoile recouvre plusieurs pixels dudit détecteur (8).

9. Dispositif d'acquisition de cible selon l'une quelconque des revendications précédentes, **caractérisé en ce que** le dispositif d'acquisition de cible est destiné à pouvoir fonctionner de jour comme de nuit et **en ce qu'**au moins une partie de la bande II de l'infrarouge est incluse dans le domaine spectral de sensibilité du détecteur (8) de la voie senseur d'étoiles.

10. Dispositif d'acquisition de cible selon la revendication 9, **caractérisé en ce que** le domaine spectral de sensibilité du détecteur (8) de la voie senseur d'étoiles a une limite inférieure valant sensiblement 1µm et une limite supérieure sensiblement comprise entre 2,5µm et 4µm.

11. Dispositif d'acquisition de cible selon l'une quelconque des revendications précédentes, **caractérisé en ce que** le détecteur (8) de la voie senseur d'étoiles et le détecteur (6) de la voie senseur optronique sont confondus en un seul et même détecteur.

12. Dispositif d'acquisition de cible selon l'une quelconque des revendications 1 à 8, **caractérisé en ce que** la voie senseur d'étoiles possède deux détecteurs, l'un sensible dans le visible et l'autre dans au moins une partie de l'infrarouge, et **en ce que** la voie senseur optronique possède deux détecteurs, l'un sensible dans la bande II de l'infrarouge et l'autre sensible dans la bande III de l'infrarouge.

13. Dispositif d'acquisition de cible selon l'une quelconque des revendications précédentes, **caractérisé en ce que** les moyens d'asservissement de la voie senseur optronique asservissent la ligne de visée de la voie senseur optronique sur la cible (13).

14. Dispositif d'acquisition de cible selon l'une quelconque des revendications 1 à 12, **caractérisé en ce que** les moyens d'asservissement de la voie senseur optronique asservissent la ligne de visée de la voie senseur optronique sur les étoiles (16) du ciel.

15. Dispositif d'acquisition de cible selon l'une quelconque des revendications précédentes, **caractérisé en ce que** le dispositif d'acquisition de cible est une boule (10) de poursuite et **en ce que** les deux voies sont intégrées à l'intérieur de la boule (10).

16. Dispositif d'acquisition de cible selon l'une quelconque des revendications précédentes, **caractérisé en ce que** le dispositif d'acquisition de cible comporte au moins un filtre (2) polarisant rectiligne qui est disposé de manière à ce que, lors de l'acquisition d'une cible volante (13), la composante de polarisation rectiligne horizontale de la lumière qui arrive sur le détecteur (6, 8) d'au moins l'une des voies soit substantiellement plus atténuée que la composante de polarisation rectiligne verticale de la lumière qui arrive sur le détecteur (6, 8) de ladite voie.

17. Aéronef de surveillance, **caractérisé en ce que** l'aéronef comporte un dispositif (10) d'acquisition de cible selon l'une quelconque des revendications précédentes.

18. Aéronef de surveillance selon la revendication 17, **caractérisé en ce que** l'aéronef comporte un dispositif (22) de veille ainsi que des moyens (24) de communication entre le dispositif (10) d'acquisition de cible et le dispositif (22) de veille, lesdits moyes (24) de communication permettant au dispositif (10) d'acquisition de cible de s'accrocher, successivement dans le temps, sur plusieurs cibles (13) et de revenir régulièrement s'accrocher sur chacune desdites cibles (13).

19. Aérostat de surveillance, **caractérisé en ce que** l'aérostat comporte un dispositif (10) d'acquisition de cible selon l'une quelconque des revendications 1 à 16.

20. Aérostat de surveillance selon la revendication 19, **caractérisé en ce que** l'aérostat comporte un dispositif (22) de veille ainsi que des moyens (24) de communication entre le dispositif (10) d'acquisition de cible et le dispositif (22) de veille, lesdits moyens (24) de communication permettant au dispositif (10) d'acquisition de cible de s'accrocher, successivement dans le temps, sur plusieurs cibles (13) et de revenir régulièrement s'accrocher sur chacune desdites cibles (13).

21. Système d'estimation de trajectoire d'une cible (13), **caractérisé en ce que** le système d'estimation comporte un seul aéronef selon l'une quelconque des revendications 17 à 18 ou un seul aérostat selon l'une quelconque des revendications 19 à 20, **en ce que** ledit aéronef ou ledit aérostat comporte un télémètre et **en ce que** le système d'estimation comporte des moyens (21) de reconstruction de la trajectoire de la cible (13) à partir des images fournies par l'aéronef ou par l'aérostat et à partir des mesures de télémétrie.

22. Système d'estimation de trajectoire d'une cible (13), **caractérisé en ce que** le système d'estimation comporte au moins deux aéronefs de surveillance selon l'une quelconque des revendications 17 à 18 ou deux aérostats selon l'une quelconque des revendications 19 à 20 et des moyens (21) de reconstruction de la trajectoire de la cible (13) par triangulation à partir des images fournies par les différents aéronefs ou par les différents aérostats.

23. Système de défense **caractérisé en ce qu'**il comporte un système d'estimation selon l'une quelconque des revendications 21 à 22 et au moins un aéronef d'interception auquel est fournie au moins une portion de la trajectoire estimée par le système d'estimation.

## Claims

1. Target (13) acquisition device, intended to be mounted on an aircraft or on an aerostat, comprising an optronic sensor channel for the acquisition of a target comprising a detector (6) and means for slaving the boresight of the optronic sensor channel, the optronic sensor channel being reset to the stars of the sky so as to ensure the locating of the target, **characterized in that** the target (13) acquisition device comprises for said resetting a star sensor channel comprising a detector (8), and a rigid mechanical link between the boresights of the star sensor and optronic sensor channels.

2. Target acquisition device according to Claim 1, **characterized in that** the detectors (6, 8) of the star sensor and optronic sensor channels are matrix detectors, **in that** at least a part of the boresight of the star sensor channel and a part of the boresight of the optronic sensor channel are aligned with one another, and **in that** the mechanical link between the boresights of the star sensor and optronic sensor channels is sufficiently rigid to maintain the correspondence existing between the pixels (30) of the detector (6) of the optronic sensor channel and pixels (31) of the detector (8) of the star sensor channel.

3. Target acquisition device according to Claim 2, **characterized in that** the target acquisition device comprises a single entrance optic which is common to the star sensor and optronic sensor channels.

4. Target acquisition device according to Claim 1, **characterized in that** the boresights of the star sensor and optronic sensor channels are disposed substantially at right angles to one another.

5. Target acquisition device according to Claim 4, **characterized in that** the field (15) of the detector (8) of the star sensor channel is large enough to always see at least two stars.

6. Target acquisition device according to any one of the preceding claims, **characterized in that** the optronic sensor channel and the star sensor channel each have an image rate one of which is a multiple of the other.

7. Target acquisition device according to Claim 6, **characterized in that** the optronic sensor channel and the star sensor channel have the same image rate and are temporally synchronized.

8. Target acquisition device according to any one of the preceding claims, **characterized in that** the detector (8) of the star sensor channel is a matrix detector and **in that** said detector (8) is disposed in such a way as to obtain a defocused image of the stars so that the image of each star covers several pixels of said detector (8).

9. Target acquisition device according to any one of the preceding claims, **characterized in that** the target acquisition device is intended to be able to operate by day and by night and **in that** at least a part of the II band of the infrared is included in the spectral domain of sensitivity of the detector (8) of the star sensor channel.

10. Target acquisition device according to Claim 9, **characterized in that** the spectral domain of sensitivity of the detector (8) of the star sensor channel has a lower limit substantially equal to 1 µm and an upper limit lying substantially between 2.5 µm and 4 µm.

11. Target acquisition device according to any one of the preceding claims, **characterized in that** the detector (8) of the star sensor channel and the detector (6) of the optronic sensor channel are merged into one and the same detector.

12. Target acquisition device according to any one of Claims 1 to 8, **characterized in that** the star sensor channel possesses two detectors, one sensitive in the visible and the other in at least a part of the infrared, and **in that** the optronic sensor channel possesses two detectors, one sensitive in the II band of the infrared and the other sensitive in the III band of the infrared.

13. Target acquisition device according to any one of the preceding claims, **characterized in that** the means for slaving the optronic sensor channel slave the boresight of the optronic sensor channel to the target (13).

14. Target acquisition device according to any one of Claims 1 to 12, **characterized in that** the means for slaving the optronic sensor channel slave the boresight of the optronic sensor channel to the stars (16) of the sky.

15. Target acquisition device according to any one of the preceding claims, **characterized in that** the target acquisition device is a tracking ball (10) and **in that** the two channels are integrated inside the ball (10).

16. Target acquisition device according to any one of the preceding claims, **characterized in that** the target acquisition device comprises at least one rectilinear polarizing filter (2) which is disposed in such a way that, during the acquisition of a flying target (13), the horizontal rectilinear polarization component of the light that arrives at the detector (6, 8) of at least one of the channels is substantially more attenuated than the vertical rectilinear polarization component of the light that arrives at the detector (6, 8) of said channel.

17. Surveillance aircraft, **characterized in that** the aircraft comprises a target acquisition device (10) according to any one of the preceding claims.

18. Surveillance aircraft according to Claim 17, **characterized in that** the aircraft comprises a watching device (22) as well as means (24) of communication between the target acquisition device (10) and the watching device (22), said means (24) of communication allowing the target acquisition device (10) to lock on, successively over time, to several targets (13) and to regularly return to lock onto each of said targets (13).

19. Surveillance aerostat, **characterized in that** the aerostat comprises a target acquisition device (10) according to any one of Claims 1 to 16.

20. Surveillance aircraft according to Claim 19, **characterized in that** the aerostat comprises a watching device (22) as well as means (24) of communication between the target acquisition device (10) and the watching device (22), said means (24) of communication allowing the target acquisition device (10) to lock on, successively over time, to several targets (13) and to regularly return to lock onto each of said targets (13).

21. Target (13) trajectory estimation system, **characterized in that** the estimation system comprises a single aircraft according to any one of Claims 17 to 18 or a single aerostat according to any one of Claims 19 to 20, **in that** said aircraft or said aerostat comprises a telemeter and **in that** the estimation system comprises means (21) for reconstructing the trajectory of the target (13) from the images provided by the aircraft or by the aerostat and from the telemetry measurements.

22. Target (13) trajectory estimation system, **characterized in that** the estimation system comprises at least two surveillance aircraft according to any one of Claims 17 to 18 or two aerostats according to any one of Claims 19 to 20 and means (21) for reconstructing the trajectory of the target (13) by triangulation from the images provided by the various aircraft or by the various aerostats.

23. Defense system **characterized in that** it comprises an estimation system according to any one of Claims 21 to 22, and at least one interception aircraft to which is supplied at least a portion of the trajectory estimated by the estimation system.

## Patentansprüche

1. Zielerfassungsvorrichtung (13), die dazu bestimmt ist, auf ein Luftfahrzeug oder ein Luftfahrzeug leichter als Luft montiert zu werden, mit einem optronischen Sensorkanal zur Erfassung eines Ziels, der einen Detektor (6) und Mittel zur Regelung der Visierlinie des optronischen Sensorkanals aufweist, wobei der optronischer Sensorkanal auf die Sterne des Himmels eingestellt wird, um die Lokalisierung des Ziels zu gewährleisten, **dadurch gekennzeichnet, dass** die Zielerfassungsvorrichtung (13) für die Einstellung einen Sternsensorkanal, der einen Detektor (8) enthält, und eine starre mechanische Verbindung zwischen den Visierlinien des Sternsensorkanals und des optronischen Sensorkanals aufweist.

2. Zielerfassungsvorrichtung nach Anspruch 1, **dadurch gekennzeichnet, dass** die Detektoren (6, 8) des Sternsensorkanals und des optronischen Sensorkanals Matrixdetektoren sind, dass mindestens ein Teil der Visierlinie des Sternsensorkanals und ein Teil der Visierlinie des optronischen Sensorkanals fluchtend zueinander ausgerichtet sind, und dass die mechanische Verbindung zwischen den Visierlinien des Sternsensorkanals und des optronischen Sensorkanals starr genug ist, um die Entsprechung aufrechtzuerhalten, die zwischen den Pixeln (30) des Detektors (6) des optronischen Sensorkanals und den Pixeln (31) des Detektors (8) des Sternsensorkanals existiert.

3. Zielerfassungsvorrichtung nach Anspruch 2, **dadurch gekennzeichnet, dass** die Zielerfassungsvorrichtung eine einzige Eingangsoptik aufweist, die dem Sternsensorkanal und dem optronischen Sensorkanal gemeinsam ist.

4. Zielerfassungsvorrichtung nach Anspruch 1, **dadurch gekennzeichnet, dass** die Visierlinien des Sternsensorkanals und des optronischen Sensorkanals im Wesentlichen im rechten Winkel zueinander angeordnet sind.

5. Zielerfassungsvorrichtung nach Anspruch 4, **dadurch gekennzeichnet, dass** das Feld (15) des Detektors (8) des Sternsensorkanals groß genug ist, um permanent mindestens zwei Sterne zu sehen.

6. Zielerfassungsvorrichtung nach einem der vorhergehenden Ansprüche, **dadurch gekennzeichnet, dass** der optronische Sensorkanal und der Sternsensorkanal je einen Bildtakt habe, von denen der eine ein Vielfaches des anderen ist.

7. Zielerfassungsvorrichtung nach Anspruch 6, **dadurch gekennzeichnet, dass** der optronische Sensorkanal und der Sternsensorkanal den gleichen Bildtakt haben und zeitlich synchronisiert sind.

8. Zielerfassungsvorrichtung nach einem der vorhergehenden Ansprüche, **dadurch gekennzeichnet, dass** der Detektor (8) des Sternsensorkanals ein Matrixdetektor ist, und dass der Detektor (8) so angeordnet ist, dass ein defokussiertes Bild der Sterne erhalten wird, damit das Bild jedes Sterns mehrere Pixel des Detektors (8) abdeckt.

9. Zielerfassungsvorrichtung nach einem der vorhergehenden Ansprüche, **dadurch gekennzeichnet, dass** die Zielerfassungsvorrichtung dazu bestimmt ist, Tag und Nach arbeiten zu können, und dass mindestens ein Teil des Bands II des Infrarots im Spektralempfindlichkeitsbereich des Detektors (8) des Sternsensorkanals enthalten ist.

10. Zielerfassungsvorrichtung nach Anspruch 9, **dadurch gekennzeichnet, dass** der Spektralempfindlichkeitsbereich des Detektors (8) des Sternsensorkanals eine Untergrenze, die im Wesentlichen den Wert 1 µm hat, und eine Obergrenze hat, die im Wesentlichen zwischen 2,5 µm und 4 µm liegt.

11. Zielerfassungsvorrichtung nach einem der vorhergehenden Ansprüche, **dadurch gekennzeichnet, dass** der Detektor (8) des Sternsensorkanals und der Detektor (6) des optronischen Sensorkanals in einem Detektor vereint sind.

12. Zielerfassungsvorrichtung nach einem der Ansprüche 1 bis 8, **dadurch gekennzeichnet, dass** der Sternsensorkanal zwei Detektoren besitzt, der eine empfindlich im sichtbaren Bereich und der andere in mindestens einem Teil des Infrarotbereichs, und dass der optronische Sensorkanal zwei Detektoren besitzt, der eine empfindlich im Band II des Infrarots und der andere empfindlich im Band III des Infrarots.

13. Zielerfassungsvorrichtung nach einem der vorhergehenden Ansprüche, **dadurch gekennzeichnet, dass** die Regelungsmittel des optronischen Sensorkanals die Visierlinie des optronischen Sensorkanals auf das Ziel (13) regeln.

14. Zielerfassungsvorrichtung nach einem der Ansprüche 1 bis 12, **dadurch gekennzeichnet, dass** die Regelungsmittel des optronischen Sensorkanals die Visierlinie des optronischen Sensorkanals auf die Sterne (16) des Himmels regeln.

15. Zielerfassungsvorrichtung nach einem der vorhergehenden Ansprüche, **dadurch gekennzeichnet, dass** die Zielerfassungsvorrichtung eine Verfolgungskugel (10) ist, und dass die zwei Kanäle im Inneren der Kugel (10) eingebaut sind.

16. Zielerfassungsvorrichtung nach einem der vorhergehenden Ansprüche, **dadurch gekennzeichnet, dass** die Zielerfassungsvorrichtung mindestens ein geradliniges polarisierendes Filter (2) aufweist, das so angeordnet ist, dass bei der Erfassung eines fliegenden Ziels (13) die waagrechte geradlinige Polarisationskomponente des Lichts, das am Detektor (6, 8) mindestens eines der Kanäle ankommt, deutlich gedämpfter ist als die senkrechte geradlinige Polarisationskomponente des Lichts, das am Detektor (6,8) des Kanals ankommt.

17. Überwachungsluftfahrzeug, **dadurch gekennzeichnet, dass** das Luftfahrzeug eine Zielerfassungsvorrichtung (10) nach einem der vorhergehenden Ansprüche aufweist.

18. Überwachungsluftfahrzeug nach Anspruch 17, **dadurch gekennzeichnet, dass** das Luftfahrzeug eine Überwachungsvorrichtung (22) sowie Mittel (24) zur Kommunikation zwischen der Zielerfassungsvorrichtung (10) und der Überwachungsvorrichtung (22) aufweist, wobei die Kommunikationsmittel (24) es der Zielerfassungsvorrichtung (10) ermöglichen, sich zeitlich nacheinander an verschiedene Ziele (13) anzukoppeln und sich regelmäßig wieder an jedes der ziele (13) anzukoppeln.

19. Überwachungsluftfahrzeug leichter als Luft, **dadurch gekennzeichnet, dass** das Luftfahrzeug leichter als Luft eine Zielerfassungsvorrichtung (10) nach einem der Ansprüche 1 bis 16 aufweist.

20. Überwachungsluftfahrzeug leichter als Luft nach Anspruch 19, **dadurch gekennzeichnet, dass** das Luftfahrzeug leichter als Luft eine Überwachungsvorrichtung (22) sowie Mittel (24) zur Kommunikation zwischen der Zielerfassungsvorrichtung (10) und der Überwachungsvorrichtung (22) aufweist, wobei die Kommunikationsmittel (24) es der Zielerfassungsvorrichtung (10) ermöglichen, sich zeitlich nacheinander an verschiedene Ziele (13) anzukoppeln, und sich regelmäßig wieder an jedes der Ziele (13) anzukoppeln.

21. System zur Schätzung der Flugbahn eines Ziels (13), **dadurch gekennzeichnet, dass** das Schätzsystem ein einziges Luftfahrzeug nach einem der Ansprüche 17 bis 18 oder ein einziges Luftfahrzeug leichter als Luft nach einem der Ansprüche 19 bis 20 aufweist, dass das Luftfahrzeug oder das Luftfahrzeug leichter als Luft einen Entfernungsmesser aufweist, und dass das Schätzsystem Mittel (21) zur Rekonstruktion der Flugbahn des Ziels (13) ausgehend von Bildern, die vom Luftfahrzeug oder vom Luftfahrzeug leichter als Luft geliefert werden, und ausgehend von Entfernungsmessungen aufweist.

22. System zur Schätzung der Flugbahn eines Ziels (13), **dadurch gekennzeichnet, dass** das Schätzsystem mindestens zwei Überwachungsluftfahrzeuge nach einem der Ansprüche 17 bis 18 oder zwei Luftfahrzeuge leichter als Luft nach einem der Ansprüche 19 bis 20 und Mittel (21) zur Rekonstruktion der Flugbahn des Ziels (13) durch Triangulation ausgehend von den von den verschiedenen Luftfahrzeugen oder von den verschiedenen Luftfahrzeugen leichter als Luft gelieferten Bildern aufweist.

23. Verteidigungssystem, **dadurch gekennzeichnet, dass** es ein Schätzsystem nach einem der Ansprüche 21 bis 22 und mindestens ein Abfang-Luftfahrzeug aufweist, an das mindestens ein Abschnitt der vom Schätzsystem geschätzten Flugbahn geliefert wird.
